Europäisches Patentamt

European Patent Office

Office européen des brevets

(19)

(11) Numéro de publication : **0 499 519 A1**

# (12) DEMANDE DE BREVET EUROPEEN

(21) Numéro de dépôt : 92400339.5

(22) Date de dépôt : 10.02.92

(51) Int. Cl.$^5$ : **G02B 6/44**

(30) Priorité : **12.02.91 FR 9101605**

(43) Date de publication de la demande :
**19.08.92 Bulletin 92/34**

(84) Etats contractants désignés :
**BE DE GB IT NL**

(71) Demandeur : **COMMISSARIAT A L'ENERGIE ATOMIQUE**
**31-33, rue de la Fédération**
**F-75015 Paris (FR)**

(72) Inventeur : **Guiraud, Marc Henri**
**1, Les Aires de Pallenc**
**F-84360 Merindol (FR)**

(74) Mandataire : **Mongrédien, André et al**
**c/o BREVATOME 25, rue de Ponthieu**
**F-75008 Paris (FR)**

(54) **Câble optique muni d'un moyen de destruction des fibres optiques de ce câble.**

(57)   Ce câble comprend un faisceau de fibres optiques (4) et un moyen de destruction des fibres optiques, qui agit lors d'un sectionnement du faisceau de fibres optiques (4) à quasiment tout endroit du câble (2) et qui détruit les fibres. Ce moyen peut comprendre un tube (6) qui est rempli d'un produit capable de détruire les fibres par contact avec celles-ci, le tube résistant à ce produit et étant logé dans le faisceau de fibres.

   Application à la détection d'une intrusion ou d'une tentative d'intrusion dans un système de sécurité qui utilise un câble optique.

FIG.1

EP 0 499 519 A1

La présente invention concerne les câbles optiques.

Elle s'applique notamment à tout système de sécurité qui utilise un câble optique, par exemple un système de transmission d'informations confidentielles par fibres optiques ou un système à câble optique permettant le scellement d'un conteneur.

Un tel système de scellement est connu par le document EP-A-0147328, appelé "document I" par la suite, et par le document US-A-4 688 891, auxquels on se reportera.

Les utilisateurs d'un système de sécurité utilisant un câble optique ont intérêt à déceler toute intrusion ou tentative d'intrusion dans ce système.

Le système décrit dans de document I est prévu pour permettre la détection d'une effraction ou d'une tentative d'effraction en vue de voler tout ou partie de ce qui se trouve dans de conteneur scellé par ce système.

Pour ce faire, on compare des images, prises respectivement immédiatement après scellement du conteneur et dors d'un contrôle ultérieur, d'une image transmise par des fibres optiques du câble que comporte de système, lorsque ces fibres reçoivent un faisceau lumineux.

Si les images sont différentes, on en déduit qu'il y a eu effraction ou tentative d'effraction entre de moment où le conteneur a été scellé et le moment du contrôle.

Cependant, les grands progrès réalisés dans le domaine du soudage bout-à-bout de fibres optiques font craindre qu'il devienne très difficile de détecter - en utilisant une lumière transmise par les fibres du câble - une telle effraction ou tentative d'effraction presque parfaitement dissimulée.

La présente invention vise à résoudre le problème suivant : étant donne un câble optique qui aurait été coupé, rendre quasiment impossible une réparation "invisible" de ce câble, c'est-à-dire une réparation qui ne se verrait pas en utilisant une lumière transmise par les fibres optiques du câble.

Pour résoudre ce problème, de câble optique objet de d'invention, comprenant un faisceau de fibres optiques et un moyen de destruction des fibres optiques, qui agit dors d'un sectionnement du faisceau de fibres optiques à quasiment tout endroit du câble et qui détruit les fibres, est caractérisé en ce que le moyen de destruction comprend :

– un réservoir de forme allongée qui est logé dans le faisceau de fibres optiques et qui s'étend le long de ce faisceau, et
– un produit qui est contenu dans le réservoir et qui est apte à détruire les fibres optiques lorsqu'il est en contact avec celles-ci, le réservoir étant fait d'un matériau qui résiste au produit,

de sorte qu'en sectionnant de faisceau de fibres optiques en n'importe quel endroit du câble optique, on y sectionne aussi le réservoir, de produit s'en échappe et détruit les fibres optiques.

De ce fait, l'image de vérification (prise lors du contrôle ultérieur) est rendue différente de l'image prise immédiatement après scellement.

Par ailleurs, l'invention est remarquable pour sa simplicité de mise en oeuvre.

Le réservoir est par exemple un tube fermé en ses deux extrémités.

Les extrémités du réservoir peuvent être en retrait par rapport aux extrémites correspondantes du faisceau de fibres optiques.

Ceci est particulièrement utile dans le cas du système décrit dans le document I, pour que l'on ne puisse pas voir la présence du réservoir sur l'image initiale, prise immédiatement après de scellement du conteneur.

Le câble optique objet de l'invention peut comprendre en outre deux embouts qui enserrent respectivement les extrémités du faisceau de fibres optiques.

Alors, les extrémités du réservoir peuvent être respectivement situées dans ces embouts.

Le câble peut comprendre en outre au moins une gaine qui enveloppe le faisceau de fibres optiques et qui est également destructible par le produit.

Enfin, on peut utiliser des fibres optiques en polyméthylméthacrylate et, dans ce cas, le réservoir peut être fait d'un copolymère de chlorure et d'acétate de vinyle et peut être rempli de chloroforme.

On peut aussi utiliser des fibres optiques en silice attaquable par l'acide fluorhydrique et, dans ce cas, le réservoir peut être fait de quartz pur (qui est inattaquable par l'acide fluorhydrique) ou d'un caoutchouc à base de vinylidène et d'hexafluoropropylène et peut être rempli d'acide fluorhydrique.

La présente invention sera mieux comprise à la lecture de la description d'exemples de réalisation donnes ci-après à titre purement indicatif et nullement limitatif, en référence aux dessins annexés sur lesquels :

– la figure 1 est une vue en coupe longitudinale schématique d'un mode de réalisation particulier du câble optique objet de la présente invention,
– la figure 2 est une vue écorchée en perspective du câble représente sur la figure 1, et
– la figure 3 montre une destruction locale de ce dernier.

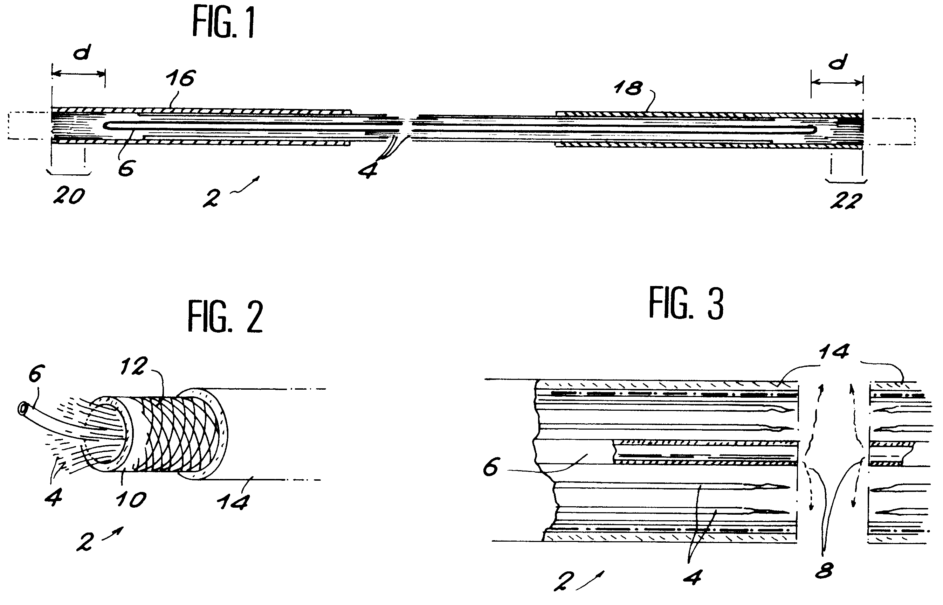

Le câble optique 2 conforme à l'invention, dont la figure 1 montre une vue en coupe longitudinale schématique et la figure 2 une vue ecorchée en perspective, comprend un faisceau de fibres optiques 4 au sein duquel est loge un tube 6 qui forme un réservoir et qui est fermé en ses deux extrémités.

Ce tube 6 est rempli d'un produit 8 (figure 3) qui est capable de détruire les fibres 4 lorsqu'il est en contact avec elles.

Le tube 6 est fait d'un matériau résistant à ce produit, c'est-à-dire indestructible par ce dernier.

Le câble optique 2 comprend également une gaine protectrice 10 dans laquelle se trouve le faisceau de fibres 4 et qui peut être renforcée par une tresse métallique 12.

La gaine protectrice 10 peut être elle-même logée dans une autre gaine 14.

Les gaines 10 et 14 peuvent être faites d'un matériau que le produit 8 est capable de détruire.

En tant que produit, on utilise par exemple un liquide capable de dissoudre les fibres 4 au moindre contact.

En considérant le câble 2 disposé rectilignement, le tube 6 peut être disposé suivant l'axe du faisceau de fibres optiques 4 ou parallèlement à cet axe, ou encore faire un angle avec cet axe.

Le tube 6 s'étend sur toute la longueur du faisceau de fibres optiques 4.

Toutefois, dans certaines réalisations, comme le câble utilisé dans le système dont il est question dans le document I, il est préférable que les extrémités du tube 6 soient en retrait d'une valeur d, par exemple égale à 5 mm, des extrémités correspondantes du faisceau de fibres optiques 4, afin qu'on ne puisse pas voir comment est placé le tube 6.

Le tube a bien entendu un diamètre suffisant pour que le liquide puisse s'en échapper lors du sectionnement du tube.

Le câble 2 peut être pourvu d'embouts 16 et 18 par exemple métalliques, qui emprisonnent les extrémités du faisceau de fibres optiques 4 et de la gaine 14 de chaque côté du câble.

En chaque extrémité du faisceau de fibres 4, les extrémités de ces fibres sont dans un même plan qui est appelé "plan optique".

Dans l'exemple représenté sur la figure 1, on voit que chaque plan optique se situe au niveau de l'extrémité de l'embout correspondant.

Dans le système décrit dans le document I, ce sont les embouts 16 et 18 qui seraient insérés dans le corps de scellé que comporte ce système.

Tous les solvants ne détruisent pas forcément toutes les fibres optiques et tout matériau ne résiste pas nécessairement à tout solvant.

Il existe des ensembles fibres 4 - solvant 8 - matériau du tube 6 préferentiels.

A titre d'exemple, on utilise des fibres 4 en P.M.M.A. (polymethylméthacrydate), un tube 6 en Tygon (marque deposée), qui est un copolymère de chlorure et d'acétate de vinyle, et le chloroforme en tant que solvant 8.

A titre purement indicatif et nullement limitatif, on utilise :
– un faisceau de 64 fibres en PMMA, dont la longueur vaut 500 mm, le diamètre des fibres étant égal à 0,25 mm,
– un tube formant réservoir en Tygon (marque déposée) de 450 mm de long, dont le diamètre extérieur vaut 1,52 mm et le diamètre intérieur 0,51 mm et qui contient du chloroforme,
– les gaines 12 et 14 sont faites d'une matière plastique que le chloroforme peut dissoudre, ont une longueur de 455 mm, un diamètre intérieur de 3,5 mm et un diamètre extérieur de 4 mm,
– les embouts sont en laiton noirci, ont une longueur de 50 mm, un diamètre intérieur de 4 mm et un diamètre extérieur de 5 mm.

Pour fabriquer le câble optique 2 correspondant aux renseignements que l'on vient de fournir à titre purement indicatif et nullement limitatif, on commence par préparer le faisceau des 64 fibres optiques en prévoyant une longueur supérieure à 500 mm pour ces fibres, ce qui permettra ultérieurement leur sectionnement pour former les plans optiques.

On prépare ensuite le tube formant réservoir.

Pour ce faire, on le remplit de chloroforme par l'intermédiaire d'une seringue de 20 ml.

On soude ensuite une première extrémité du tube au moyen d'un fer à souder, sur une longueur de quelques mm, puis la deuxième extrémité également au moyen d'un fer à souder, à une distance de 490 mm par rapport à l'endroit de la première soudure.

Le tube formant réservoir est ensuite placé dans le faisceau de fibres optiques de façon que ses soudures soient par exemple respectivement à 5 mm des extrémités du faisceau de fibres (lorsque les plans optiques sont formés) puis des gaines sont mises en place.

On monte ensuite les embouts aux extrémités du faisceau et on les sertit avec une pince appropriée.

Les zones libres de chaque embout sont ensuite remplies par une résine de silicone du genre de la résine Rhodorsil RTV 147 A (temps de séchage : 24 heures).

On sectionne ensuite les fibres par exemple au moyen d'une lame de rasoir on utilisant par exemple pour ce faire des faces dressées des embouts.

Au lieu de fibres en P.M.M.A., on peut utiliser des fibres en silice attaquable par d'acide fluorhydrique, un tube en Viton (marque deposée), qui est un caoutchouc à base de vinylidène et d'hexafluoropropylène, ou en quartz pur, ce tube étant rempli d'acide fluorhydrique et soudé en ses deux extrémités.

On considère maintenant un système de sécurité qui comprend le câble optiques 2 et qui est par exemple un système de scellement du genre de celui qui est décrit dans le document I ou un système de transmission d'informations confidentielles par fibres optiques.

Dans les deux cas, une intrusion ou une tentative d'intrusion dans le système implique une coupure du faisceau de fibres optiques 4 (dans le premier cas, en vue d'ouvrir le conteneur, et dans le deuxième cas, en vue d'installer une dérivation optique).

Alors, l'intrus, qui ignore a priori la position du tube 6 formant réservoir, coupe non seulement des fibres 4 mais encore de tube, de solvant 8 s'en échappe et dissout les extrémités des fibres qui résultent de la coupure et sont situées au voisinage decelle-ci (figure 3).

Il est alors quasiment impossible de rétablir la continuité optique du câble de façon discrète.

Dans le premier cas, (système de scellement), l'effraction sera immanquablement constatée par comparaison d'une image d'une extrémité du faisceau de fibres, prise immédiatement après le scellement, à l'image de cette extrémité, prise après l'effraction.

Dans de deuxième cas (système de transmission), on pourra par exemple remarquer l'apparition d'une atténuation optique supplémentaire due à l'installation de la dérivation optique ou aux soudures lorsque cette dérivation aura été enlevée et la continuité optique du câble rétablie.

En effet, la réparation du câble nécessite d'abord d'enlever les parties des fibres endommagées par le solvant puis de ressouder convenablement les fibres les unes aux autres, ce dont un contrôleur se rendra compte aisément et qui en tout cas prendra un temps considérable, d'autant plus important qu'il y a plus de fibres optiques.

## Revendications

1. Câble optique (2) comprenant un faisceau de fibres optiques (4) et un moyen (6, 8) de destruction des fibres optiques, qui agit lors d'un sectionnement du faisceau de fibres optiques (4) à quasiment tout endroit du câble (2) et qui détruit les fibres, caractérisé en ce que le moyen de destruction comprend :
   – un réservoir (6) de forme allongée qui est logé dans le faisceau de fibres optiques (4) et qui s'étend le long de ce faisceau, et
   – un produit (8) qui est contenu dans le réservoir (6) et qui est apte à détruire les fibres optiques (4) lorsqu'il est en contact avec celles-ci, le réservoir (6) étant fait d'un matériau qui résiste au produit,
   de sorte qu'en sectionnant le faisceau de fibres optiques en n'importe quel endroit du câble optique, on y sectionne aussi le réservoir, le produit s'en échappe et détruit les fibres optiques.

2. Câble optique selon la revendication 1, caractérisé en ce que le réservoir (6) est un tube fermé en ses deux extrémités.

3. Câble optique selon l'une quelconque des revendications 1 et 2, caractérisé en ce que les extrémités du réservoir (6) sont en retrait par rapport aux extrémités correspondantes du faisceau de fibres optiques (4).

4. Câble optique selon l'une quelconque des revendications 1 à 3, caractérisé en ce qu'il comprend en outre deux embouts (16, 18) qui enserrent respectivement les extrémités du faisceau de fibres optiques (4).

5. Câble optique selon la revendication 4, caractérisé en ce que les extrémités du réservoir (6) sont respectivement situées dans les embouts (16, 18).

6. Câble optique selon l'une quelconque des revendications 1 à 5, caractérisé en ce qu'il comprend en outre au moins une gaine (10, 14) qui enveloppe le faisceau de fibres optiques (4) et qui est également destructible par le produit (8).

7. Câble optique selon l'une quelconque des revendications 1 à 6, caractérisé en ce que les fibres optiques (4) sont en polyméthylméthacrylate, en ce que le produit (8) est le chloroforme et en ce que le matériau dont est fait le réservoir (6) est un copolymère de chlorure et d'acétate de vinyle.

8. Câble optique selon l'une quelconque des revendications 1 à 6, caractérisé en ce que les fibres optiques (4) sont en silice attaquable par l'acide fluorhydrique, en ce que le produit est l'acide fluorhydrique et en ce que le matériau dont est fait le réservoir (6) est le quartz pur.

9. Câble optique selon l'une quelconque des revendications 1 à 6, caractérisé en ce que les fibres optiques (4) sont en silice attaquable par l'acide fluorhydrique, en ce que le produit est l'acide fluorhydrique et en ce que le matériau dont est fait le réservoir (6) est un caoutchouc à base de vinylidène et d'hexafluoropropylène.

FIG. 1

FIG. 2

FIG. 3

European Patent
Office

**EUROPEAN SEARCH REPORT**

Application Number

EP    92 40 0339

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 314 741 (C DEMINET) | 1 | G02B6/44 |
| A | * claims; figures * | 6 | |
| | --- | | |
| Y | DE-A-2 842 077 (SIEMENS) | 1 | |
| A | * claims; figures * | 6,8,9 | |
| | --- | | |
| A,D | US-A-4 688 891 (M.CARRATT) | 1,4,5 | |
| | * claims; figures * | | |
| | ----- | | |

TECHNICAL FIELDS
SEARCHED (Int. Cl.5)

G02B

The present search report has been drawn up for all claims

| Place of search | Date of completion of the search | Examiner |
|---|---|---|
| THE HAGUE | 11 MAY 1992 | PFAHLER R. |